# EUROPÄISCHE PATENTSCHRIFT

(11) **EP 1 773 852 B1**
(45) Veröffentlichungstag und Bekanntmachung des Hinweises auf die Patenterteilung: **26.05.2010**
(21) Anmeldenummer: 05755297.8
(22) Anmeldetag: 23.06.2005
(51) Int. Cl.: C07F 9/40

(54) **VERFAHREN ZUR HERSTELLUNG VON PHOSPHONATO-SILANEN**
METHOD FOR PRODUCING PHOSPHONATO SILANES
PROCEDE DE PRODUCTION DE PHOSPHONATO-SILANES

(30) Priorität: 29.07.2004 DE 102004036722
(43) Veröffentlichungstag der Anmeldung: 18.04.2007
(73) Patentinhaber: Wacker Chemie AG, 81737 München (DE)
(72) Erfinder: BOCKHOLT, Andreas, 80804 München (DE); BRADER, Leonhard, 83730 Fischbachau (DE)
(74) Vertreter: Fritz, Helmut
(86) Internationale Anmeldenummer: PCT/EP2005/006816
(87) Internationale Veröffentlichungsnummer: WO 2006/012952

(56) Entgegenhaltungen:
- AT-B- 230 874
- US-A- 2 768 193

## Beschreibung

Die Erfindung betrifft ein Verfahren zur Herstellung von Organosiliciumverbindungen mit Phosphonatgruppen.

Phosphonate können nach der Arbuzov-Michaelis-Reaktion hergestellt werden (Ber. Dtsch. Chem. Ges. 1898, 31, 1048-1055; Pure Appl. Chem. 1964, 9, 307-335). Dabei werden Halogenalkane oder Verbindungen, welche Halogenalkylreste tragen, mit Trialkylphosphiten umgesetzt. Die Herstellung erfolgt im Batch-Verfahren durch Mischen der Reaktanden bei hohen Temperaturen und anschließender Destillation der Reaktionsmischung. Auf diesem Weg sind auch Organosiliciumverbindungen mit Phosphonatgruppen, im Folgenden Phosphonato-Silane genannt, der allgemeinen Formel (I),

R^{1'}ₙ(R^{2'}O)₃₋ₙ-Si-R^{3'}-PO(OR^{4'}) (OR^{5'}) (I)

in der R^{1'} einen gegebenenfalls halogensubstituierten Alkyl-, Cycloalkyl-, Alkenyl- oder Arylrest, R^{2'} einen Alkylrest mit 1-6 Kohlenstoffatomen oder einen ω-Oxaalkyl-alkylrest mit insgesamt 2-10 Kohlenstoffatomen, R^{3'} einen gegebenenfalls substituierten verzweigten oder unverzweigten Alkylrest mit 1-10 Kohlenstoffatomen, R^{4'} und R^{5'} einen gegebenenfalls substituierten Alkyl-, Cycloalkyl-, Alkenyl- oder Arylrest und u = 0, 1, 2 oder 3 bedeuten, herstellbar (US 2768193; J. Polym. Sci., Part A: Polym. Chem. 2003, 41, 48-59). Für die Herstellung dieser Verbindungen sind in der Regel Temperaturen > 170°C erforderlich. Da die beschriebenen Verbindungen jedoch thermisch wenig stabil sind (J. Chem. Soc. 1962, 592-600) und sich bei Temperaturen von T ≥ 200°C exotherm zersetzen, sind die erreichbaren Ausbeuten begrenzt. Ausserdem resultiert daraus ein nicht unerhebliches Gefährdungspotential. Besonders für Verbindungen nach Formel I, in denen R³ eine Methyleneinheit bedeutet, ist die Herstellung bei Reaktionstemperaturen T > 100°C aus sicherheitstechnischen Erwägungen (100 K - Regel) sehr bedenklich. Wird die Reaktion zur Herstellung dieser Verbindungen bei unbedenklichen Reaktionstemperaturen von T ≤ 100°C geführt, resultieren unwirtschaftliche Raum-Zeit-Ausbeuten.

Die Nachteile der bekannten Verfahren bestehen in den geringen Raum-Zeit-Ausbeuten bei niederigen Reaktionstemperaturen sowie den durch die Zersetzung des Produktes bedingten begrenzten Ausbeuten bei hohen Reaktionstemperaturen und dem Gefährdungspotential, welches von den exothermen Zersetzungsreaktionen der Produkte ausgeht.

Aufgabe der Erfindung ist die Bereitstellung eines wirtschaftlichen Verfahrens zur Herstellung von Phosphonato-Silanen bei niederigen Reaktionstemperaturen und unter minimaler Bildung von Nebenprodukten.

Gegenstand der Erfindung ist ein Verfahren zur Herstellung von Phosphonato-Silanen der allgemeinen Formel (II)

R¹ₙ(X)₃₋ₙ-Si-R³-PO(OR⁴) (OR⁵) (II)

bei dem halogenhaltige Silane der allgemeinen Formel (III)

R¹ₙ(X)₃₋ₙ-Si-R³-Hal (III)

mit Phosphiten der allgemeinen Formel (IV)

P(OR⁴) (OR⁵) (OR⁶) (IV)

umgesetzt werden, wobei
- R¹: einen gegebenenfalls halogensubstituierten Kohlenwasserstoffrest mit 1-20 Kohlenstoffatomen oder Wasserstoff,
- X: eine hydrolysierbare Gruppe oder OH,
- R³: einen gegebenenfalls halogensubstituierten Alkylenrest mit 1-10 Kohlenstoffatomen,
- R⁴, R⁵ und R⁶: jeweils gegebenenfalls halogensubstituierte Kohlenwasserstoffreste mit 1-20 Kohlenstoffatomen,
- Hal: ein Halogenatom und
- n: die Werte 0, 1, 2 oder 3 bedeuten,
bei dem das bei der Reaktion entstehende flüchtige Nebenprodukt R⁶-Hal dem Reaktionsgemisch entzogen wird und
bei dem während der Reaktion kontinuierlich oder wiederholt ein Teil des Reaktionsgemisches entnommen, vom bereits gebildeten Produkt befreit und zum Rest des Reaktionsgemisches zurückgegeben wird.

Die Vorteile des Verfahrens bestehen in den hohen Raum-Zeit-Ausbeuten bei niederigen Reaktionstemperaturen sowie in der minimalen Bildung von Nebenprodukten gegenüber den bekannten Verfahren. Eine weitere Aufreinigung der Produkte ist daher in vielen Fällen nicht nötig. Weiterhin ist das Verfahren durch die niedrigen Prozesstemperaturen sicherheitstechnisch unproblematisch.

R¹ ist vorzugsweise ein gegebenenfalls halogensubstituierter Alkyl-, Cycloalkyl-, Alkenyl- oder Arylrest mit vorzugsweise jeweils 1 bis 10 Kohlenstoffatomen, besonders bevorzugt ein Alkylrest mit 1 bis 3 Kohlenstoffatomen, insbesondere Methyl, Ethyl.
R³ ist vorzugsweise ein gegebenenfalls substituierter verzweigter oder unverzweigter Alkylenrest mit 1 bis 6 Kohlenstoffatomen, besonders bevorzugt 1 bis 3 Kohlenstoffatomen, insbesondere Methylen, Ethylen, n-Propylen. R⁴, R⁵ und R⁶ sind jeweils vorzugsweise gegebenenfalls halogensubstituierte Alkyl-, Cycloalkyl-, Alkenyl- oder Arylreste mit vorzugsweise jeweils 1 bis 16 Kohlenstoffatomen, besonders bevorzugt Alkylreste mit 1 bis 6 Kohlenstoffatomen, insbesondere Methyl, Ethyl, Phenyl.
Halogensubstituenten an R¹ bis R⁶ sind vorzugsweise Fluor oder Chlor.
X bedeutet bevorzugt eine Alkoxygruppe mit 1 bis 3 Kohlenstoffatomen oder ein Halogen, wie Fluor, Chlor, Brom. Hal ist vorzugsweise Brom, Chlor.

Das Entfernen des Produktes erfolgt bevorzugt durch wiederholte, insbesondere durch kontinuierliche Entnahme einer Menge des Reaktionsgemischesaus dem Reaktionsgefäß. Dabei werden bevorzugt 5-50% des Reaktionsgemisches pro Stunde entnommen. Die anschließende Auftrennung des Reaktionsgemisches in Produkt und Edukt erfolgt bevorzugt destillativ, insbesondere durch das Aufbringen des Reaktionsgemisches auf einen Dünnschichtverdampfer. Das Produkt wird in der Hochsiederfraktion aufgefangen, während das Destillat in das Reaktionsgefäß zurückgeführt wird. Dies geschieht vorzugsweise kontinuierlich. Das bei der Reaktion entstehende flüchtige Nebenprodukt R⁶-Hal wird dem Reaktionsgemisch entzogen, bevorzugt destillativ unter vermindertem Druck. Bevorzugt wird das gesamte Verfahren kontinuierlich geführt.

Das Verfahren kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120° C bei 10013 mbar bevorzugt. Beispiele für solche Lösungsmittel sind Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Das Verfahren wird vorzugsweise bei Temperaturen von 20°C bis 300°C, insbesondere 50°C bis 200°C durchgeführt. Das Verfahren wird bevorzugt unter Ausschluss von Luft und Feuchtigkeit durchgeführt.

Alle vorstehenden Symbole der vorstehenden Formeln weisen ihre Bedeutungen jeweils unabhängig voneinander auf. In allen Formeln ist das Siliciumatom vierwertig.

### Beispiel 1: Herstellung von Diethylphosphonatomethyldimethoxymethlysilan

In einem 2L Dreihalskolben wird ein Gemisch aus 618,7 g (4,0 mol) Chlormethyldimethoxymethylsilan und 664,6 g (4,0 mol) Triethylphosphit bei einem Druck von 350 mbar 2 Stunden bei 100°C gerührt und das entstehende Ethylchlorid in einer Kühlfalle aufgefangen. Dann wird mittels einer Steigleitung ein konstantes Volumen von ca. 450 mL/h der Reaktionsmischung auf einen Dünnschichtverdampfer (p = 20 mbar, T = 100°C) aufgebracht. Das Diethylphosphonatomethyl-dimethoxymethlysilan wird in der Hochsiederfraktion aufgefangen, während das Destillat durch eine Pumpe in das Reaktionsgefäß zurückgeführt wird. Das Volumen der Reaktionsmischung wird durch die Zugabe von Eduktmischung konstant gehalten. Die Ausbeute an Diethylphosphonatomethyl-dimethoxymethlysilan beträgt 180 mL/h. Das Produkt wir in einer Reinheit von 95% (nach GC) erhalten. Die Edukte bilden die Hauptverunreinigungen, Nebenprodukte werden nur in Spuren gefunden.

### Beispiel 2: Herstellung von Diethylphosphonatomethylmethoxydimethlysilan

In einem 2L Dreihalskolben wird ein Gemisch aus 554,6 g (4,0 mol) Chlormethylmethoxydimethylsilan und 664,6 g (4,0 mol) Triethylphosphit bei einem Druck von 350 mbar 4 Stunden bei 100°C gerührt und das entstehende Ethylchlorid in einer Kühlfalle aufgefangen. Dann wird mittels einer Steigleitung ein konstantes Volumen von ca. 400 mL/h der Reaktionsmischung auf einen Dünnschichtverdampfer (p = 20 mbar, T = 100°C) aufgebracht. Das Diethylphosphonatomethyl-methoxydimethlysilan wird in der Hochsiederfraktion aufgefangen, während das Destillat durch eine Pumpe in das Reaktionsgefäß zurückgeführt wird. Das Volumen der Reaktionsmischung wird durch die Zugabe von Eduktmischung konstant gehalten. Die Ausbeute an Diethylphosphonatomethyl-methoxydimethlysilan beträgt 125 mL/h. Das Produkt wir in einer Reinheit von 96% (nach GC) erhalten. Die Edukte bilden die Hauptverunreinigungen, Nebenprodukte werden nur in Spuren gefunden.

### Beispiel 3: Herstellung von Diethylphosphonatomethyltrimethoxysilan

In einem 2L Dreihalskolben wird ein Gemisch aus 682,7 g (4,0 Mol) Chlormethyltrimethoxysilan und 664,6 g (4,0 mol) Triethylphosphit bei einem Druck von 300 mbar 4 Stunden bei 100°C gerührt und das entstehende Ethylchlorid in einer Kühlfalle aufgefangen. Dann wird mittels einer Steigleitung ein konstantes Volumen von ca. 450 mL/h der Reaktionsmischung auf einen Dünnschichtverdampfer (p = 5 mbar, T = 100°C) aufgebracht. Das Diethylphosphonatomethyl-trimethoxysilan wird in der Hochsiederfraktion aufgefangen, während das Destillat durch eine Pumpe in das Reaktionsgefäß zurückgeführt wird. Das Volumen der Reaktionsmischung wird durch die Zugabe von Eduktmischung konstant gehalten. Die Ausbeute an Diethylphosphonatomethyl-trimethoxysilan beträgt 100 mL/h. Das Produkt wir in einer Reinheit von 96% (nach GC) erhalten. Die-Edukte bilden die Hauptverunreinigungen, Nebenprodukte werden nur in Spuren gefunden.

### Beispiel 4: Herstellung von Diethylphosphonatopropyltrimethoxysilan

In einem 2L Dreihalskolben wird ein Gemisch aus 1600 g (8,0 mol)Chlorpropyltrimethoxysilan und 60 g Triethylphosphit (0,4 mol) wird zum Rückfluss erhitzt. Dann wird durch Zugabe von von weiterem Triethylphosphit die Temperatur des Reaktionsgemisches auf 180°C eingestellt. Die Mischung wird bei dieser Temperatur 6 Stunden gerührt. Dann wird mittels einer Steigleitung ein konstantes Volumen von ca. 250 mL/h der Reaktionsmischung auf einen Dünnschichtverdampfer (p = 5 mbar, T = 180°C) aufgebracht. Das Diethylphosphonatopropyltrimethoxysilan wird in der Hochsiederfraktion aufgefangen, während das Destillat durch eine Pumpe in das Reaktionsgefäß zurückgeführt wird. Das Volumen der Reaktionsmischung wird durch die Zugabe von Eduktmischung konstant gehalten. Die Ausbeute an Diethylphosphonatopropyltrimethoxysilan beträgt 60 mL/h. Das Produkt wir in einer Reinheit von 90%(nach GC) erhalten. Nach einem weiteren Dünnschichterschritt wird das Produkt in einer Reinheit von 97% (nach GC) erhalten. Die Edukte bilden die Hauptverunreinigungen, Nebenprodukte werden nur in Spuren gefunden.

### Nicht erfinungsgemässes Vergleichsbeispiel: Herstellung von Diethylphosphonatomethyltrimethoxysilan

In einem 500 mL Dreihalskolben wird ein Gemisch 102,4 g (0,6 mol) Chlormethyltrimethoxysilan und 99,7 g (0,6 mol) Triethylphosphit bei 100°C 50 Stunden erhitzt. Dann destilliert man im Vakuum (0,1 mbar) bei 100°C alle flüchtigen Bestandteile ab. Man erhält 132,1 g Diethylphosphonatomethyl-trimethoxysilan in einer Reinheit von 94 % (nach GC, 0,46 mol, Ausbeute 76% d.Th.) .

## Patentansprüche

1. Verfahren zur Herstellung von Phosphonato-Silanen der allgemeinen Formel (II)
R¹ₙ(X)₃₋ₙ-Si-R³-PO(OR⁴)(OR⁵) (II)
bei dem halogenhaltige Silane der allgemeinen Formel (III)
R¹ₙ(_{X})₃₋ₙ-Si-R³-Hal (III)
mit Phosphiten der allgemeinen Formel (IV)
P(OR⁴) (OR⁵) (OR⁶) (IV)
umgesetzt werden, wobei
R¹ einen gegebenenfalls halogensubstituierten Kohlenwasserstoffrest mit 1-20 Kohlenstoffatomen oder Wasserstoff,
X eine hydrolysierbare Gruppe oder OH,
R³ einen gegebenenfalls halogensubstituierten Alkylenrest mit 1-10 Kohlenstoffatomen,
R⁴, R⁵ und R⁶ jeweils einen gegebenenfalls halogensubstituierten Kohlenwasserstoffrest mit 1-20 Kohlenstoffatomen,
Hal ein Halogenatom und
n die Werte 0, 1, 2 oder 3 bedeuten, bei dem das bei der Reaktion entstehende flüchtige Nebenprodukt R⁶-Hal dem Reaktionsgemisch entzogen wird und
bei dem während der Reaktion kontinuierlich oder wiederholt ein Teil des Reaktionsgemisches entnommen, vom bereits gebildeten Produkt befreit und zum Rest des Reaktionsgemisches zurückgegeben wird.

2. Verfahren nach Anspruch 1, bei dem R¹ ein Alkylrest mit 1 bis 3 Kohlenstoffatomen oder Wasserstoff ist.

3. Verfahren nach Anspruch 1 oder 2, bei dem R³ ausgewählt wird aus Methylen, Ethylen, n-Propylen.

4. Verfahren nach Anspruch 1 bis 3, bei dem R⁴, R⁵ und R⁶ jeweils einen Alkylrest mit 1 bis 6 Kohlenstoffatomen oder Phenyl bedeuten.

5. Verfahren nach Anspruch 1 bis 4, bei dem X eine Alkoxygruppe mit 1 bis 3 Kohlenstoffatomen, Fluor, Chlor oder Brom bedeutet.

6. Verfahren nach Anspruch 1 bis 5, bei dem kontinuierlich Reaktionsgemisch entnommen wird.

7. Verfahren nach Anspruch 1 bis 6, bei dem das gesamte Verfahren kontinuierlich geführt wird .

## Claims

1. Process for preparing phosphonatosilanes of the general formula (II)
R¹ₙ(X)₃₋ₙ-Si-R³-PO(OR⁴) (OR⁵) (II)
in which halogenated silanes of the general formula (III)
R¹ₙ(X)₃₋ₙ-Si-R³-Hal (III)
are reacted with phosphites of the general formula (IV)
P(OR⁴) (OR⁵) (OR⁶) (IV)
where
R¹ is an optionally halogen-substituted hydrocarbon radical having 1-20 carbon atoms or hydrogen,
X is a hydrolyzable group or OH,
R³ is an optionally halogen-substituted alkylene radical having 1-10 carbon atoms,
R⁴, R⁵ and R⁶ are each an optionally halogen- substituted hydrocarbon radical having 1-20 carbon atoms,
Hal is a halogen atom and
n is 0, 1, 2 or 3,
in which the volatile R⁶-Hal by-product formed in the reaction is withdrawn from the reaction mixture and in which a portion of the reaction mixture is withdrawn continuously or repeatedly during the reaction, freed of the product already formed and added back to the rest of the reaction mixture.

2. Process according to Claim 1, in which R¹ is an alkyl radical having from 1 to 3 carbon atoms or hydrogen.

3. Process according to Claim 1 or 2, in which R³ is selected from methylene, ethylene, n-propylene.

4. Process according to Claim 1 to 3, in which R⁴, R⁵ and R⁶ are each an alkyl radical having from 1 to 6 carbon atoms or phenyl.

5. Process according to Claim 1 to 4, in which X is an alkoxy group having from 1 to 3 carbon atoms, fluorine, chlorine or bromine.

6. Process according to Claim 1 to 5, in which reaction mixture is withdrawn continuously.

7. Process according to Claim 1 to 6, in which the entire process is conducted continuously.

## Revendications

1. Procédé pour la préparation de phosphonato-silanes de formule générale (II)
R¹ₙ(X)₃₋ₙ-Si-R³-PO(OR⁴) (OR⁵) (II)
dans lequel on fait réagir des silanes halogénés de formule générale (III)
R¹ₙ(X)₃₋ₙ-Si-R³-Hal (III)
avec des phosphites de formule générale (IV)
P(OR⁴) (OR⁵) (OR⁶) (IV)
où
R¹ représente un atome d'hydrogène ou un radical hydrocarboné éventuellement substitué par halogène, ayant de 1 à 20 atomes de carbone,
X représente un groupe hydrolysable ou OH,
R³ représente un radical alkylène éventuellement substitué par halogène, ayant de 1 à 10 atomes de carbone,
R⁴, R⁵ et R⁶ représentent chacun un radical hydrocarboné éventuellement substitué par halogène, ayant 1-20 atomes de carbone,
Hal représente un atome d'halogène et
n représente les valeurs 0, 1, 2 ou 3,
dans lequel on élimine du mélange réactionnel le sous-produit R⁶-Hal volatil qui se forme lors de la réaction et dans lequel pendant la réaction, en continu ou de façon répétée, on prélève une partie du mélange réactionnel, on la libère du produit déjà formé et on la renvoie au reste du mélange réactionnel.

2. Procédé selon la revendication 1, dans lequel R¹ est un atome d'hydrogène ou un radical alkyle ayant de 1 à 3 atomes de carbone.

3. Procédé selon la revendication 1 ou 2, dans lequel R³ est choisi parmi les radicaux méthylène, éthylène, n-propylène.

4. Procédé selon les revendications 1 à 3, dans lequel R⁴, R⁵ et R⁶ représentent chacun un radical alkyle ayant de 1 à 6 atomes de carbone ou phényle.

5. Procédé selon les revendications 1 à 4, dans lequel X représente un atome de fluor, chlore ou brome ou un groupe alcoxy ayant de 1 à 3 atomes de carbone.

6. Procédé selon les revendications 1 à 5, dans lequel le mélange réactionnel est prélevé en continu.

7. Procédé selon les revendications 1 à 6, dans lequel tout le procédé est réalisé en continu.
